# EUROPEAN PATENT APPLICATION

(11) **EP 4 693 358 A1**
(43) Date of publication of application: **11.02.2026**
(21) Application number: 24193733.3
(22) Date of filing: 08.08.2024
(51) Int. Cl.: H01H 9/54, H01H 33/59

(54) **IMPROVEMENTS RELATING TO CIRCUIT BREAKERS IN POWER TRANSMISSION NETWORKS**

(71) Applicant: GE Vernova Technology GmbH, 5400 Baden (CH)
(72) Inventor: GESKE, Martin, 12277 Berlin (DE); DAVIDSON, Colin, Stafford, ST16 1WS (GB)
(74) Representative: Openshaw & Co.

(57) **Abstract**

There is provided an apparatus for operating a direct current circuit breaker, DCCB, the apparatus comprising: at least one memory; and at least one processor coupled with the at least one memory and configured to cause the apparatus to: receive an indication corresponding to one of a plurality of modes for operating the DCCB, wherein the plurality of modes for operating the DCCB comprises a testing mode and a fault-current breaking mode; generate a control signal for activating a current commutation branch of the DCCB, wherein the control signal comprises a first positive gate voltage in response to the indication corresponding to the testing mode, and wherein the control signal comprises a second positive gate voltage in response to the indication corresponding to the fault-current breaking mode; and wherein the first positive gate voltage is lower than the second positive gate voltage.

## Description

### Field

The subject matter herein relates generally to the field of power transmission networks and more specifically to circuit breakers in power transmission networks.

### Introduction

In high voltage direct current (HVDC) power transmission networks, alternating current (AC) power is typically converted to direct current (DC) power (an operational current) for transmission via overhead lines, under-sea cables and/or underground cables. This conversion removes the need to compensate for the AC reactive/capacitive load effects imposed by the power transmission medium, i.e. the transmission line or cable, and reduces the cost per kilometre of the lines and/or cables, and thus becomes cost-effective when power needs to be transmitted over a long distance. DC power can also be transmitted directly from offshore wind parks to onshore AC power transmission networks, for instance.

The conversion between DC power and AC power is utilised where it is necessary to interconnect DC and AC networks. In any such power transmission network, power conversion means also known as converters (i.e., power converters in converter stations) are required at each interface between AC and DC power to effect the required conversion from AC to DC or from DC to AC.

The choice of the most suitable HVDC power transmission network or scheme depends on the particular application and scheme features. Examples of power transmission networks include monopole power transmission networks and bipole power transmission networks.

A HVDC power transmission network may comprise a Voltage Source Converter (VSC). A VSC may be used by the HVDC power transmission network to convert the DC to AC or vice versa. A VSC may comprise one or more semiconductor devices.

Direct Current Circuit Breakers (DCCB), may be used for protection of VSC based HVDC power transmission networks or DC networks. A hybrid DCCB may incorporate multiple switch elements, whereas one switch element with serialized Insulated Gate Bipolar Transistors (IGBTs) is used for fast fault-current interruption. In case of a detected fault, the operational current is commutated from a main branch of the DCCB to the current-commutation branch (CCB) of the DCCB to interrupt the fault current. The CCB may comprise a plurality of gates connected in series to one another. Each of the plurality of first gates may comprise a semiconductor switching element. The switching element may comprise an IGBT.

### Summary

In a first aspect, there is provided an apparatus for operating a direct current circuit breaker, DCCB, the apparatus comprising: at least one memory; and at least one processor coupled with the at least one memory and configured to cause the apparatus to: receive an indication corresponding to one of a plurality of modes for operating the DCCB, wherein the plurality of modes for operating the DCCB comprises a testing mode and a fault-current breaking mode; generate a control signal for activating a current commutation branch of the DCCB, wherein the control signal comprises a first positive gate voltage in response to the indication corresponding to the testing mode, and wherein the control signal comprises a second positive gate voltage in response to the indication corresponding to the fault-current breaking mode; and wherein the first positive gate voltage is lower than the second positive gate voltage.

In a second aspect, there is provided a method of operating a direct current circuit breaker, DCCB, the method comprising: receiving an indication corresponding to one of a plurality of modes for operating the DCCB, wherein the plurality of modes for operating the DCCB comprises a testing mode and a fault-current breaking mode; generating a control signal for activating a current commutation branch of the DCCB, wherein the control signal comprises a first positive gate voltage in response to the indication corresponding to the testing mode, and wherein the control signal comprises a second positive gate voltage in response to the indication corresponding to the fault-current breaking mode; and wherein the first positive gate voltage is lower than the second positive gate voltage.

In a third aspect, there is provided a controller for controlling a DCCB in a power transmission network, the controller comprising: a memory; and at least one processor; wherein the memory comprises computer-readable instructions which when executed by the at least one processor cause the controller to receive an indication corresponding to one of a plurality of modes for operating the DCCB, wherein the plurality of modes for operating the DCCB comprises a testing mode and a fault-current breaking mode; generate a control signal for activating a current commutation branch of the DCCB, wherein the control signal comprises a first positive gate voltage in response to the indication corresponding to the testing mode, and wherein the control signal comprises a second positive gate voltage in response to the indication corresponding to the fault-current breaking mode; and wherein the first positive gate voltage is lower than the second positive gate voltage.

According to a fourth aspect, there is provided a power converter for a power transmission network, comprising: an AC side for electrically connecting to an AC network at a point of connection; and a DC side for electrically connecting to a DC network; and the controller of the third aspect.

According to a fifth aspect, there is provided a power transmission network comprising: an AC network; a DC network; and the power converter of the fourth aspect, wherein the AC network is connected to the AC side of the power converter and the DC network is connected to the DC side of the power converter.

According to a sixth aspect, there is provided a computer program comprising instructions which when executed by a processor of a controller for a power converter, cause the controller to perform the method of the second aspect.

According to a sixth aspect, there is provided a non-transitory computer-readable storage medium comprising the computer program of the sixth aspect.

It will be appreciated that particular features of different aspects share the technical effects and benefits of corresponding features of other aspects of the invention. More specifically, the apparatus, method, controller, power converter, power transmission network, computer program, non-transitory computer-readable medium, share the technical effects and benefits of the computer-implemented method.

It will also be appreciated that the use of the terms "first" and "second", and the like, are merely intended to help distinguish between similar features and are not intended to indicate a relative importance of one feature over another, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible.

### Brief description of the drawings

Embodiments of the invention will now be described by way of example only and with reference to the accompanying drawings, in which:
Figure 1 illustrates generically, an example of a power transmission network, in accordance with aspects of the present disclosure;
Figure 2 illustrates a controller, in accordance with aspects of the present disclosure;
Figure 3 illustrates a hybrid DCCB, in accordance with aspects of the present disclosure;
Figure 4 illustrates a flow diagram of a method of operating a DCCB, in accordance with aspects of the present disclosure;
Figure 5 illustrates an apparatus for driving an IGBT of a DCCB, in accordance with aspects of the present disclosure;
Figure 6 illustrates a first test sequence for a testing mode of a hybrid DCCB, in accordance with aspects of the present disclosure;
Figure 7 illustrates a second test sequence for a testing mode of a hybrid DCCB, in accordance with aspects of the present disclosure;.
Figure 8 illustrates a flow diagram of the first test sequence, in accordance with aspects of the present disclosure;
Figure 9 illustrates a flow diagram of the second test sequence, in accordance with aspects of the present disclosure;
Figure 10 illustrates a flow diagram of the third test sequence, in accordance with aspects of the present disclosure;
Figure 11 is a table showing calculated gate-oxide lifetime for a low gate voltage, in accordance with aspects of the present disclosure;
Figure 12 is a plot showing results from a single-pulse test of a DCCB using a high gate voltage, in accordance with aspects of the present disclosure;
Figure 13 is a plot showing the Voltage and Current (V/I) characteristics of an IGBT, in accordance with aspects of the present disclosure;
Figure 14 is a plot showing the change in the gate voltage of an IGBT for turn on and turn off, in accordance with aspects of the present disclosure.
Figure 15 shows a method of operating a DCCB, in accordance with aspects of the present disclosure.

### Detailed description

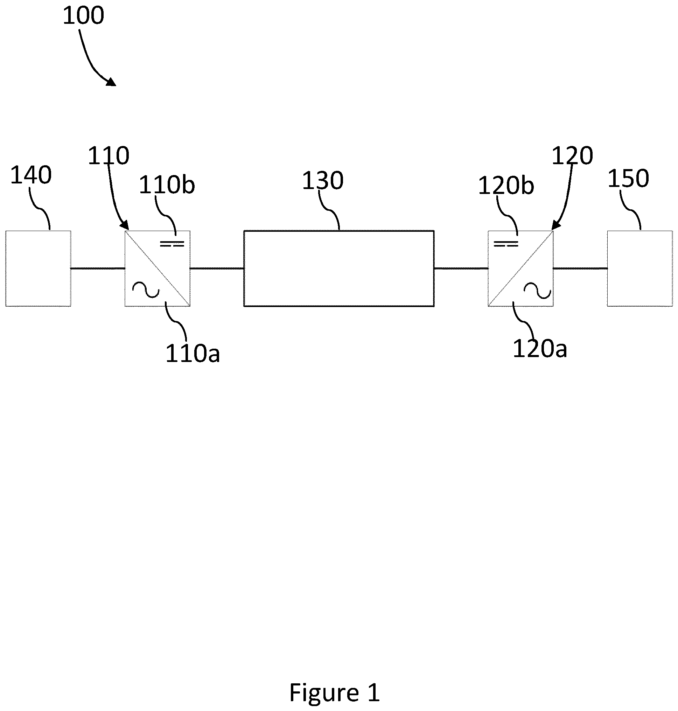

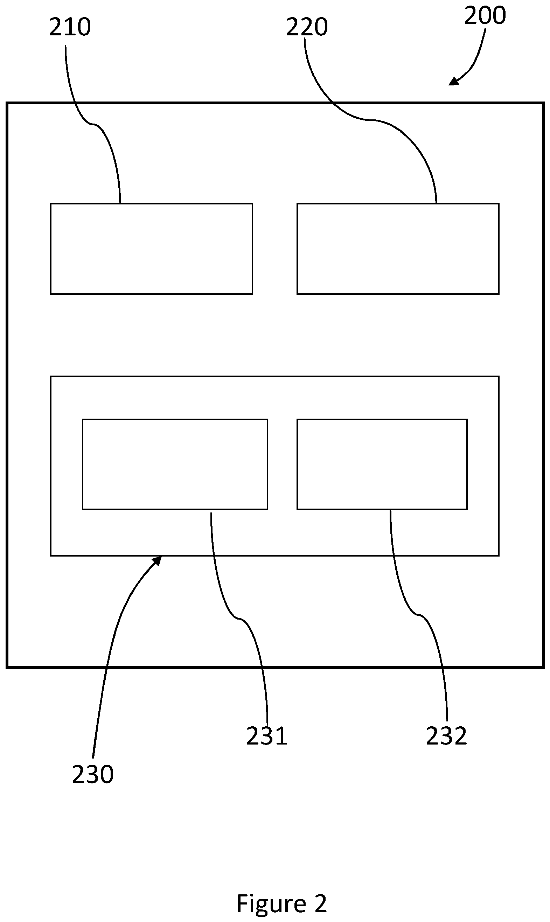

Figure 1 illustrates generically, an example of a power transmission network 100. The illustration is not intended to be limited to representing a particular power transmission scheme, such as a monopole or bipole HVDC transmission network, but is moreover provided as a generic example illustrating principles of operation of a power transmission network that are useful for understanding the invention. In this manner, the power transmission network 100 may represent, generically, a monopole or bipole scheme, or may represent a multiterminal power transmission scheme, for instance. Hence whilst specific features in the illustration are shown connected to each other with a specific number of connections, it will be understood that this is not intended to be limiting either, but moreover to illustrate a generic connection between features/components. Related, is that relative dimensions or distances between components perceived in the illustration are also not intended to be limiting. It will therefore be understood that principles and features in the network 100 and herein discussed can be applied to networks comprising the controller 200 of Figure 2, for instance. Furthermore, the method 1600 as described in relation to Figure 16.

The power transmission network 100 illustrates a first power conversion means 110 (also known as a converter station) and a second power conversion means 120. The power conversion means 110, 120, convert AC power to DC power (and vice versa), acting essentially as a rectifier (when converting AC power to DC power for transmission) and an inverter (when receiving DC power and converting to AC power). The power conversion means 110, 120, may each comprise a single converter in the case of a monopole system, or two converters in the case of a bipole system. The power conversion means 110, 120, may represent a plurality of converter stations arranged as a multi-terminal power transmission system. Generically, the first power conversion means 110 comprises a first AC side 110a and a first DC side 110b. Generically, the second power conversion means 120 comprises a second AC side 120a and a second DC side 120b.

The first power conversion means 110 is connected to a first AC network 140. The first AC network 140 is connected to the first AC side 110a of the first power conversion means 110.

The second power conversion means 120 is connected to a second AC network 150. The second AC network 150 is connected to the second AC side 120a of the second power conversion means 120. The first AC network 140 and/or second AC network 150 may be electrical power transmission systems comprising power generation apparatus, transmission apparatus, distribution apparatus, and electrical loads. The first AC network 140 and/or second AC network 150 may comprise a renewable power generation network such as a wind-power generation network, solar-power generation network, bio-power generation network. The first AC network 140 or second AC network 150 may be a consumer network. By way of non-limiting example, the first AC network 140 may be a power generation network, with second AC network 150 being a consumer network, for instance.

Also shown is a power transmission medium 130 interconnecting the first power conversion means 110 and the second power conversion means 120. The power transmission medium 130 is connected between the first DC side 110b of first power conversion means 110 and the second DC side 120b of the second power conversion means 120. The power transmission medium 130 may comprise electrical cables and other electrical components interconnecting the first and second power conversion means 110, 120. For instance, the power transmission medium 130 may comprise a conductor providing a first electrical pole; and/or a conductor providing a second electrical pole. A neutral arrangement may also be provided interconnecting the first and second power conversion means 110, 120. The power transmission medium 130 provides the medium through which DC power is transmitted between the power conversion means 110, 120.

The operation of the power transmission system 100 can be generically described as follows. The first AC power generation network 140 generates AC power that is provided to first power conversion means 110 at the first AC side 110a. The first power conversion means 110 converts the received AC power to a DC power for transmission to second power conversion means 120. The DC power is transmitted from the first DC side 110b over the power transmission medium 130 to the second DC side 120b of second power conversion means 120. The second power conversion means 120 converts the received DC power back to AC power. The AC power is then provided from the second AC side 120a to the second AC network 150 for consumption, for instance. In particular examples, the power conversion means 110 and 120 may be geographically remote. For instance, the first power conversion means 110 may reside with an off-shore wind farm and the second power conversion means 120 may reside on-shore.

It will be appreciated that various other electrical components may be located at any particular location or with any particular feature/component in the example 100. These may include switches, transformers, resistors, reactors, surge arrestors, harmonic filters and other components well known in the art.

It will be appreciated that converters or power conversion means may comprise a number of different technologies such as voltage sourced converters (for instance using insulated gate bipolar transistor (IGBT) valves) and/or a Direct Current Circuit Breaker. Such converters may generally be considered to use 'power electronics'. Power electronic converters may comprise multi-level voltage sourced converters, for instance.

It will be appreciated that cables used as power transmission mediums may comprise the following non-limiting examples of crosslinked polyethylene (XLPE) and/or mass impregnated (MI) insulation cables. Such cables may comprise a conductor (such as copper or Aluminium) surrounding by a layer of insulation. Dimensions of cables and their associated layers may be varied according to the specific application (and in particular, operational voltage requirements). Cables may further comprise strengthening or 'armouring' in applications such as subsea installation. Cables may further comprise sheaths/screens that are earthed at one or more locations.

Moreover, it will be understood that the power transmission network 100 may be used with three-phase power systems. In a three-phase power system, three conductors supply respective first, second and third phases of AC power to a consumer. Each of the first, second and third phases will typically have equal magnitude voltages or currents, which are displaced in phase from each other by 120°.

In a three-phase power system, phase currents and voltages can be represented by three single phase components: a positive sequence component; a negative sequence component; and a zero-sequence component. It is the positive sequence component that rotates in phase in accordance with the power system. Hence, in the idealistic scenario, only positive sequence voltage/current will exist. It will be understood that an unbalance in voltage or current between the first, second and third-phases, of a three-phase system, in magnitude or phase angle, can give rise to undesirable negative or zero-sequence components. Such an unbalance can be caused by fault conditions, for instance in the AC networks 140, 150.

The power transmission network 100 may be operated using methods such as synchronous grid forming (SGFM) wherein either or both of the power converters 110, 120 behave as three-phase, positive-phase sequence AC voltage sources behind an impedance, that operate at a frequency synchronous with over SGFM sources connected to the power transmission network 100.

The power transmission network 100 may further comprise a controller for controlling the operation of components of the power transmission network 100. For instance, a controller may be provided for executing the methods described herein. Such a controller may control the power conversion means 110, 120, for instance. Such a controller may be referred to as a controller means or control means. The controller may be the controller 200 of Figure 2.

Figure 2 illustrates a controller 200 as may be used in implementing the invention described herein. The controller 200 may be used to perform any of the methods described herein.

The controller 200 comprises a memory 210 and at least one processor 220. The memory 210 comprises computer-readable instructions, which when executed by the at least one processor 220, cause the controller 200 to perform the method/s described herein.

The controller 200 is shown as comprising a transceiver arrangement 230 which may comprise a separate transmitter 231 and receiver 232. The transceiver arrangement 230 may be used to operatively communicate with other components or features described herein either directly or via a further interface such as a network interface. The transceiver arrangement 230 may for instance send and receive an indication and/or control signal using transmitter 231 and receiver 232. The transceiver arrangement 230 may be arranged to receive an indication in accordance with aspects of the present disclosure. The transceiver arrangement 230 may be arranged to transmit a control signal in accordance with aspects of the present disclosure. The indication and/or control signals may contain or define electrical control parameters such as reference currents or reference voltages.

The memory 210, at least one processor 220 and transceiver arrangement 230 may be examples of means for performing various aspects of the present disclosure as described herein.

The at least one processor 220 is capable of executing computer-readable instructions and/or performing logical operations. The at least one processor 220 may be a microcontroller, microprocessor, central processing unit (CPU), field programmable gate array (FPGA) or similar programmable controller. The controller may further comprise a user input device and/or output device. The processor 220 is communicatively coupled to the memory 210 and may be coupled to the transceiver 230.

The memory 210 may be a computer readable storage medium. For instance, the memory 210 may include a non-volatile computer storage medium. For example, the memory 210 may include a hard disk drive, flash memory etc.

Whilst not shown, the controller 200 may additionally include a user input device interface and/or a user output device interface, which may allow for visual, audible or haptic inputs/outputs. Examples include interfaces to electronic displays, touchscreens, keyboards, mice, speakers and microphones.

The controller 200 may be configured to support a means for performing a method of operating a DCCB, the method comprising: receiving an indication corresponding to one of a plurality of modes for operating the DCCB, wherein the plurality of modes for operating the DCCB comprises a testing mode and a fault-current breaking mode; generating a control signal for activating a current commutation branch of the DCCB, wherein the control signal comprises a first positive gate voltage in response to the indication corresponding to the testing mode, and wherein the control signal comprises a second positive gate voltage in response to the indication corresponding to the fault-current breaking mode; and wherein the first positive gate voltage is lower than the second positive gate voltage.

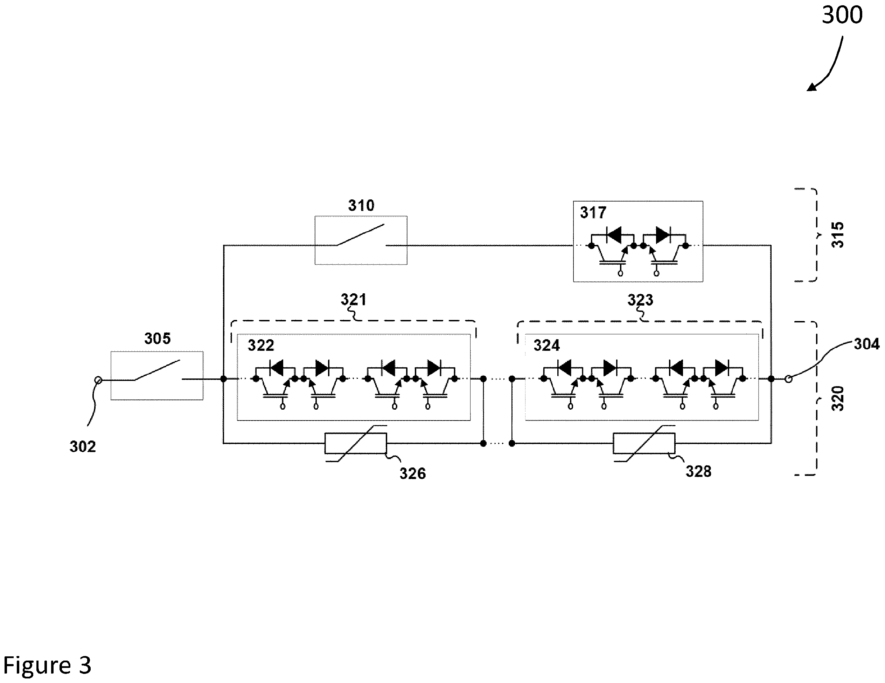

Figure 3 illustrates a hybrid DCCB 300, in accordance with aspects of the present disclosure.

The hybrid DCCB 300 comprises a residual DC circuit breaker 305, a main branch 315 and a CCB 320. The main branch 315 and the CCB 320 are connected in parallel to one another. The residual DC circuit breaker 305 is connected in series to the main branch 315 and the CCB 320.

The CCB 320 comprises a first section 321 and a second section 323 connected in series to one another. The first section 321 comprises a first set of first IGBTs 322 connected in series to one another. The second section 323 comprises a second set of first IGBTs 324 connected in series to one another. The first section 321 and second section 323 are connected in series. As indicated in Figure 3 by the dotted lines between the first section 321 and the second section 323, the CCB 320 may comprise one or more sections connected in series; as required for the voltage rating.

The first set of first IGBTs 322 and second set of first IGBTs 324 may be power semiconductor switching elements. As indicated by arrows in Figure 3, the first set of first IGBTs 322 and second set of first IGBTs 324 may be bidirectional. However, the first set of first IGBTs 322 and second set of first IGBTs 324 may be unidirectional.

The first section 321 further comprises a first surge voltage or surge current arrester 326 connected in parallel to the first set of first IGBTs 322. The second section 323 further comprises a second surge voltage or surge current arrester 328 connected in parallel to the second set of first IGBTs 324.

The main branch 315 comprises a plurality of second IGBTs 317 connected in series to one another. The main branch 315 further comprises a fast mechanical switch 310 connected in series to the plurality of second IGBTs 317.

The first set of first IGBTs 322, second set of first IGBTs 324 and second IGBTs 317 may be power semiconductor switching elements. The first set of first IGBTs 322, second set of first IGBTs 324 and second IGBTs 317 may be unidirectional. The first set of first IGBTs 322, second set of first IGBTs 324 and second IGBTs 317 may be bidirectional.

The main branch 315 may be a main current path. The CCB 320 may be a bypass branch. In operation, an operational current may be passed through the hybrid DCCB 300. The operational current may flow from a first input/output port 302 of the hybrid DCCB 300 to a second input/output port 304 of the hybrid DCCB 300. The operational current may flow from the second input/output port 304 of the hybrid DCCB 300 to the first input/output port 302 of the hybrid DCCB 300.

Commutating the operational current from the main branch 315 to the CCB 320 may comprise applying a gate voltage to the first set of first IGBTs 322 and second set of first IGBTs 324. A high gate voltage (or high gate-emitter voltage (V_{GE})) may be applied to the first set of first IGBTs 322 and second set of first IGBTs 324. The high V_{GE} tends to increase the maximum current density and therefore the maximum current-breaking capability. The use of high gate voltage has the drawback of a life-time reduction for the gate oxide of the first set of first IGBTs 322 and second set of first IGBTs 324.

DCCBs are rarely used for fault-current breaking. Hence, testing the functionality of the hybrid DCCB 300 during commissioning or within certain time periods may be required; for example, in a testing mode of the hybrid DCCB 300. The application of a high gate voltage for the first set of first IGBTs 322 and second set of first IGBTs 324 for such a testing mode (or test mode) may cause unnecessary higher lifetime consumption for the gate oxide of the first set of first IGBTs 322 and second set of first IGBTs 324. To increase the lifetime of the first set of first IGBTs 322 and second set of first IGBTs 324, test sequences may be performed using a gate voltage that is lower than the high gate voltage.

Examples described herein generally relate to considering different conditions to differentiate testing of the hybrid DCCB 300 from fault-current breaking of the hybrid DCCB 300. Examples described herein generally relate to the use of at least two different gate voltage levels for the hybrid DCCB 300.

Testing of the hybrid DCCB 300 at a lower gate voltage for the first set of first IGBTs 322 and second set of first IGBTs 324 tends to increase the lifetime of the first set of first IGBTs 322 and second set of first IGBTs 324. A high gate voltage may be used for fault-current breaking. The term high gate voltage may correspond to a gate voltage above the specified limits (for example, +15 to +20 V) that are intended for normal switch-mode operation. Examples described herein generally relate to the use of two different gate voltage levels depending on the operation mode. Typically, the selection of the respective gate-voltage level depends on the operational mode. The operational modes may comprise a testing mode and a fault-current interruption mode (or fault-current breaking mode), that may be differentiated by current measurement or signals from a controller of the hybrid DCCB 300 (not shown). The proposed detection of the testing mode and the selection of the respective gate-voltage level tends to increase the lifetime of the first set of first IGBTs 322 and second set of first IGBTs 324 and thus the lifetime of the hybrid DCCB 300.

As IGBTs are normally applied to permanent switch-mode operation, the design criterions for DCCB that are rarely switched can be modified resulting in a higher utilization of the gate oxide lifetime for short periods of fault current interruption. In consequence, much higher current levels can be interrupted with high gate voltage as the de-saturation level is increased beyond the limits of the device specification for a standard gate voltage.

The hybrid DCCB 300 incorporates series connected IGBTs (e.g., the first set of first IGBTs 322 and the second set of first IGBTs 324) in the CCB 320 and is controlled by a central or local control system (not shown) which measures the current through main branch of the DCCB 300. The IGBT gate drivers (not shown) of the CCB 320 provide at least two different levels of gate voltage that can be used to turn on or maintain an IGBT in the on state. The lower of the two voltages is used (to maximize gate oxide lifetime) whenever there is a requirement to use the CCB 320 at currents below a certain threshold for di/dt, current magnitude, indicating signal from the control system. The higher of the two voltages is used whenever the current exceeds the mentioned current thresholds or and indicating signal is send from the control system.

The hybrid DCCB 300 has high component efforts and may use approximately two converter arms for bidirectional fault-current breaking capacity. The application of lower gate voltages for testing increases the lifetime of the IGBTs gate oxide and accordingly for the complete DCCB 300. Therefore, the service life of the hybrid DCCB 300 tends to be increased. Furthermore, the cost for service and total cost of ownership of the hybrid DCCB 300 tends to be decreased.

The application of high voltage may be used for normal fault-current breaking with DCCBs. The use of a lower gate voltage may be for the standard case for gating of IGBTs, which is implemented for normal power converters in general. Examples described herein may relate to the differentiation of operational modes (for example, testing, current breaking) by current based thresholds or signaling from control systems.

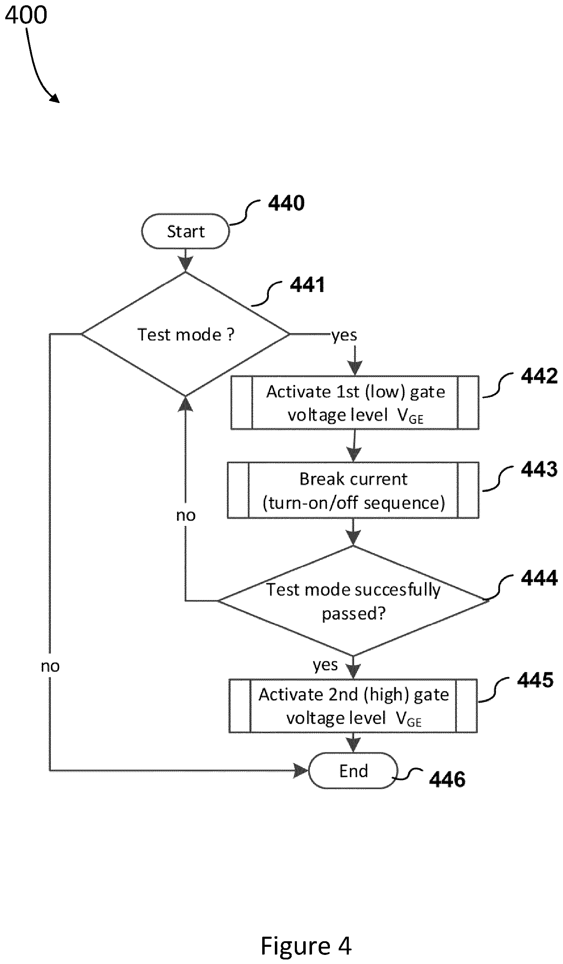

Figure 4 illustrates a flow diagram of a method 400 of operating a DCCB, in accordance with aspects of the present disclosure. The method 400 may be for operating the hybrid DCCB 300 described above in relation to Figure 3. An operational current may be directed through the DCCB whilst performing the method 400.

The method 400 starts at step 440 and ends at step 446.

Step 441 comprises determining whether the DCCB is in a testing mode (or test mode). If it is determined that the DCCB is in a testing mode, the method 441 progresses to step 442. If it is determined that the DCCB is not in a testing mode, the method ends, e.g., by progressing to step 446.

Step 442 comprises, in response to step 441 determining that the DCCB is in a testing mode, activating a first positive gate voltage. The first positive gate voltage may be a first low gate voltage level.

Step 443 comprises breaking the operational current directed through the DCCB by performing one of a plurality of test sequences.

Step 444 comprises determining whether the testing mode has successfully passed. Determining whether the testing mode has successfully passed may comprises determining that the testing mode has successfully passed. If the testing mode has successfully passed, the method progresses to step 445. Determining whether the testing mode has successfully passed may comprises determining that the testing mode has not successfully passed. If the testing mode has not successfully passed, the method returns to step 441.

Step 445, in response to step 444 determining that the testing mode has successfully passed, comprises activating a second positive gate voltage. The second positive gate voltage may be a second high gate voltage level.

The method 400 ends at step 446 following completion of step 445.

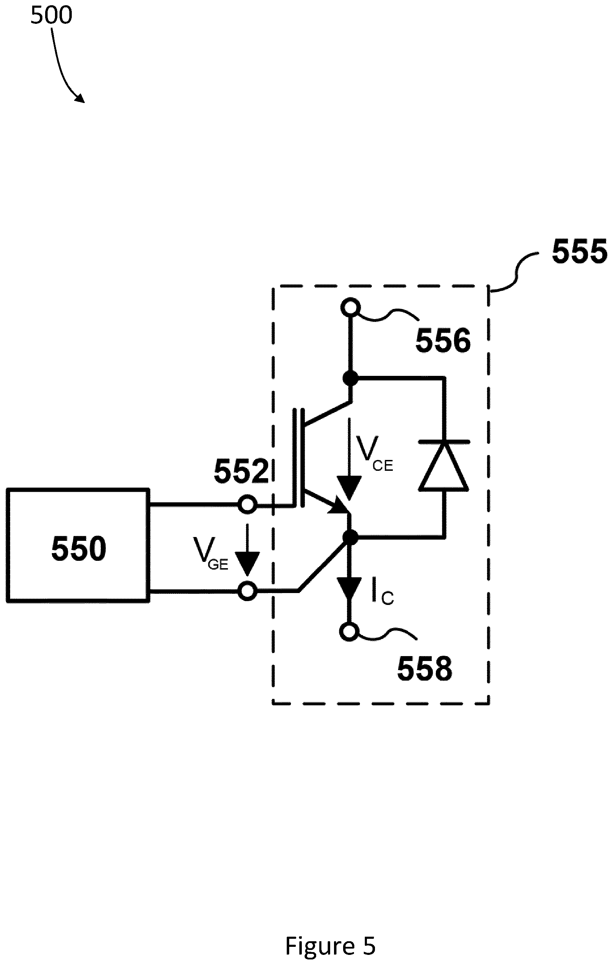

Figure 5 illustrates an apparatus 500 for driving an IGBT of a DCCB, in accordance with aspects of the present disclosure. The apparatus 500 comprises a gate driver 550 driving an IGBT 555. The IGBT 555 may be a first IGBT or a second IGBT as described above in relation to Figure 3.

The IGBT 555 comprises a collector terminal 556, gate terminal 552 and an emitter terminal 558. The gate driver 550 is arranged to apply a gate voltage (V_{GE}) across the gate terminal 552 and the emitter terminal 558. When a gate voltage V_{GE} that is positive with respect to the emitter terminal 558 is applied, a voltage between the collector terminal 556 and the emitter terminal 558 (V_{CE}) is created and thus a collector current (Ic) may flow from the collector terminal 556 to the emitter terminal 558.

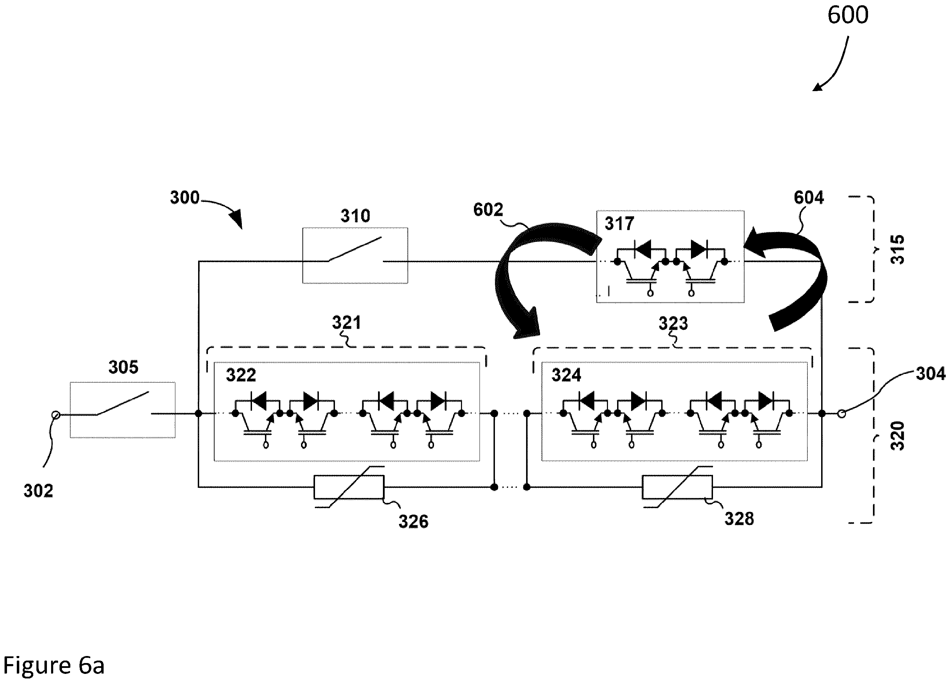

Figure 6a illustrates a first test sequence 600 for a testing mode of a hybrid DCCB, in accordance with aspects of the present disclosure. The hybrid DCCB in Figure 6a is the same as the hybrid DCCB 300 described above in relation to Figure 3. The first test sequence 600 may be performed at step 443 of Figure 4. The first test sequence 600 may comprise commutation without breaking sequence. The first test sequence 600 may comprise commutation from the main branch 315 to the CCB 320 and back with operational current (testing switching capability without breaking).

The first test sequence 600 comprises commutation of an operational current from the main branch 315 to the CCB 320; as indicated by arrow 602. The first test sequence 600 further comprises commutation of the operational current from the CCB 320 back to the main branch 315; as indicated by arrow 604. The first test sequence 600 does not comprise breaking (or interrupting) the operational current. The purpose of the first test sequence 600 is to test the switching capability of the hybrid DCCB 300.

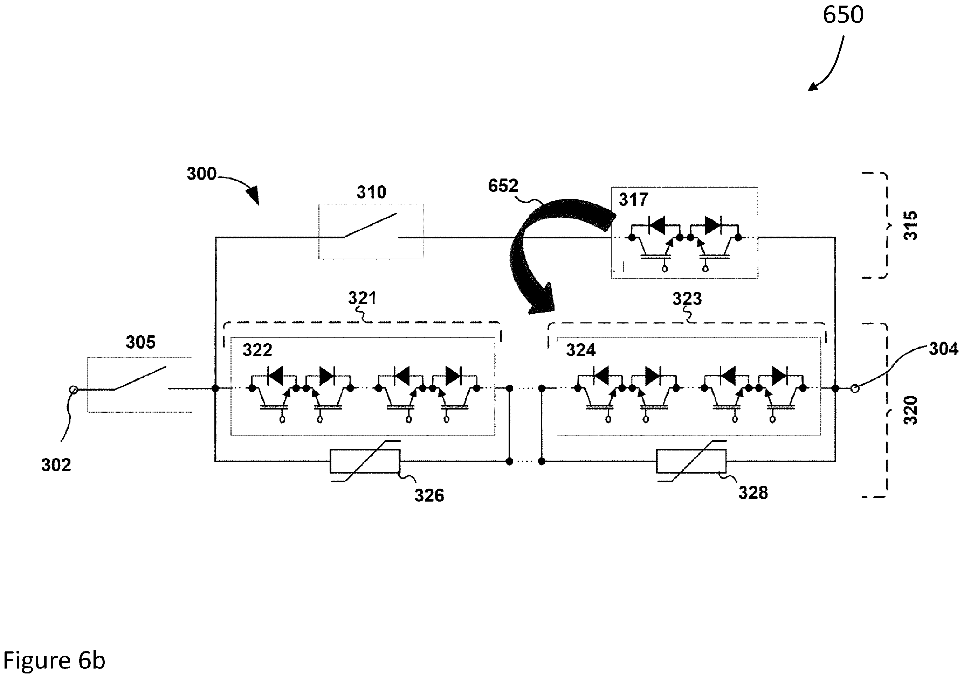

Figure 6b illustrates a second test sequence 650 for a testing mode of a hybrid DCCB, in accordance with aspects of the present disclosure. The hybrid DCCB in Figure 6b is the same as the hybrid DCCB 300 described above in relation to Figure 3. The second test sequence 650 may be performed at step 443 of Figure 4. The second test sequence 650 may comprise commutation with breaking sequence. The second test sequence 650 relates to commutation from the main branch 315 to CCB 320 and breaking with operational current. The purpose of the second test sequence 650 may be to test the breaking capability of the hybrid DCCB 300 using a low gate voltage.

The second test sequence 650 comprises commutation of an operational current from the main branch 315 to the CCB 320; as indicated by arrow 652. The second test sequence 650 comprises breaking (or interrupting) the operational current.

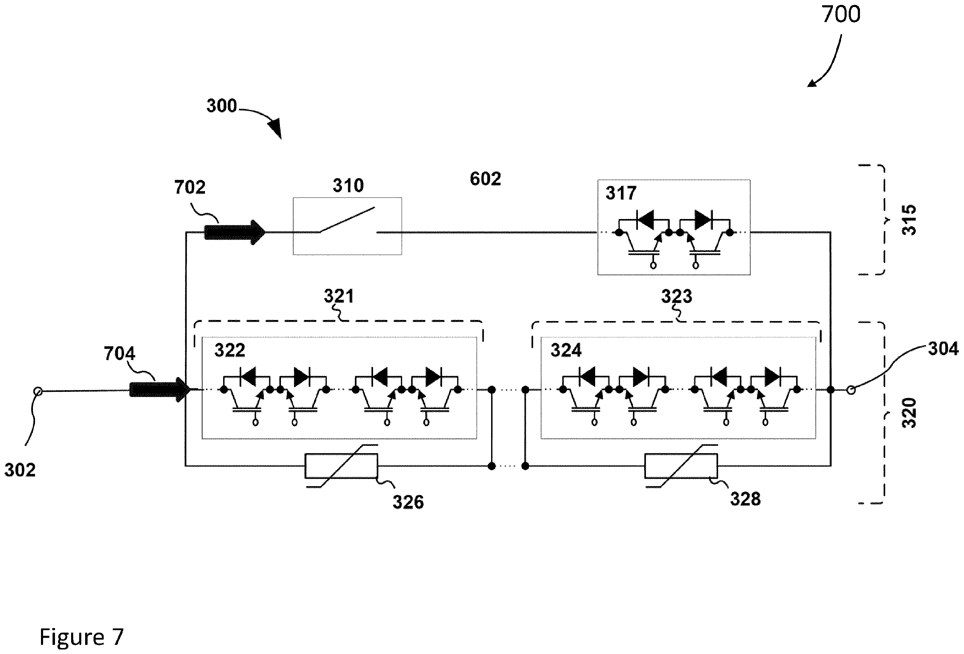

Figure 7 illustrates a third test sequence 700 for a testing mode of a hybrid DCCB, in accordance with aspects of the present disclosure. The hybrid DCCB in Figure 7 is the same as the hybrid DCCB 300 described above in relation to Figure 3. The third test sequence 700 may be performed at step 443 of Figure 4. The third test sequence 700 may comprise parallel conduction without breaking. The third test sequence 700 comprises operating the main branch 315 and activation of the CCB 320 in parallel. The third test sequence 700 further comprises turning off the CCB 320. The purpose of the third test sequence is to test the switching capability of the hybrid DCCB 300 without breaking (or interrupting) the operational current.

Any of the first test sequence 600, the second test sequence 650 or the third test sequence 700 may be performed using an operational current that flows from the first input/output port 302 of the hybrid DCCB 300 to the second input/output port 304 of the hybrid DCCB 300. Any of the first test sequence 600, the second test sequence 650 or the third test sequence 700 may be performed using an operational current that flows from the second input/output port 304 of the hybrid DCCB 300 to the first input/output port 302 of the hybrid DCCB 300.

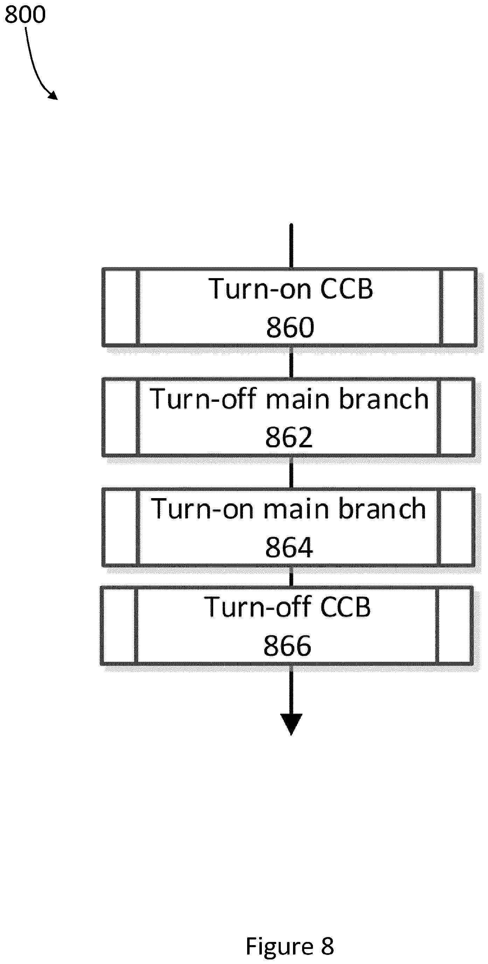

Figure 8 illustrates a flow diagram 800 of the first test sequence, in accordance with aspects of the present disclosure.

The flow diagram 800 of the first test sequence comprises steps 860, 862, 864 and 866.

Step 860 comprises turning on the CCB of the DCCB.

Step 862 comprises turning off the main branch of the DCCB.

Step 864 comprises turning on the main branch of the DCCB.

Step 866 comprises turning off the CCB.

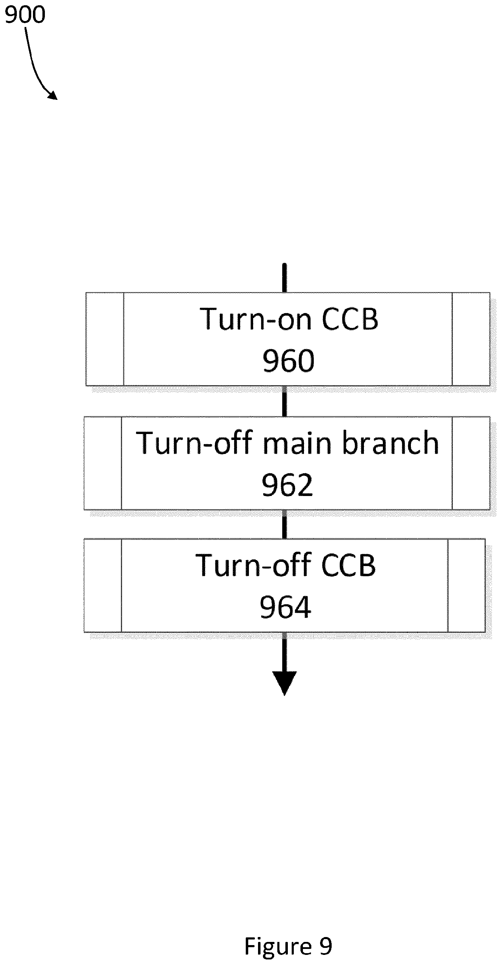

Figure 9 illustrates a flow diagram 900 of the second test sequence, in accordance with aspects of the present disclosure.

The flow diagram 900 of the second test sequence comprises steps 960, 962 and 964.

Step 960 comprises turning on the CCB of the DCCB.

Step 962 comprises turning off the main branch of the DCCB.

Step 964 comprises turning off the CCB.

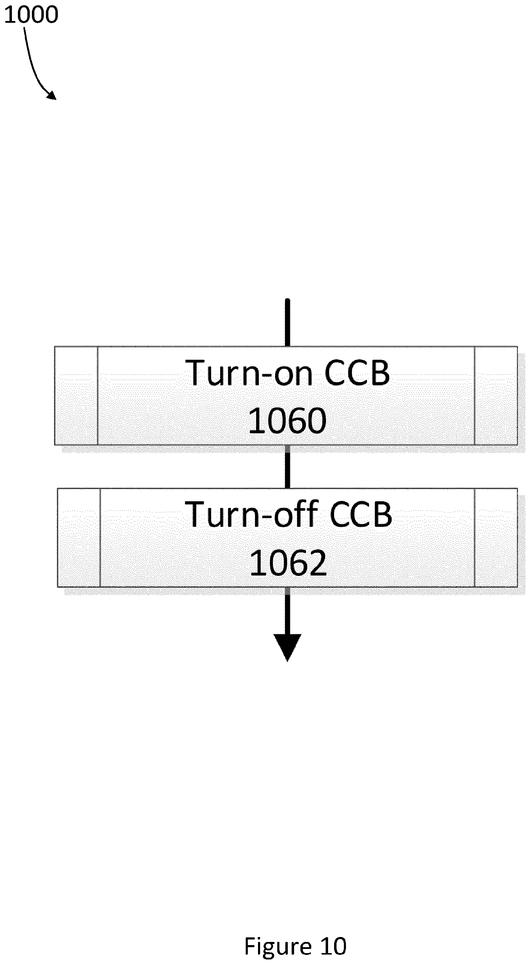

Figure 10 illustrates a flow diagram 1000 of the third test sequence, in accordance with aspects of the present disclosure.

The flow diagram 1000 of the third test sequence comprises steps 1060 and 1062.

Step 1060 comprises turning on the CCB of the DCCB.

Step 1062 comprises turning off the CCB of the DCCB.

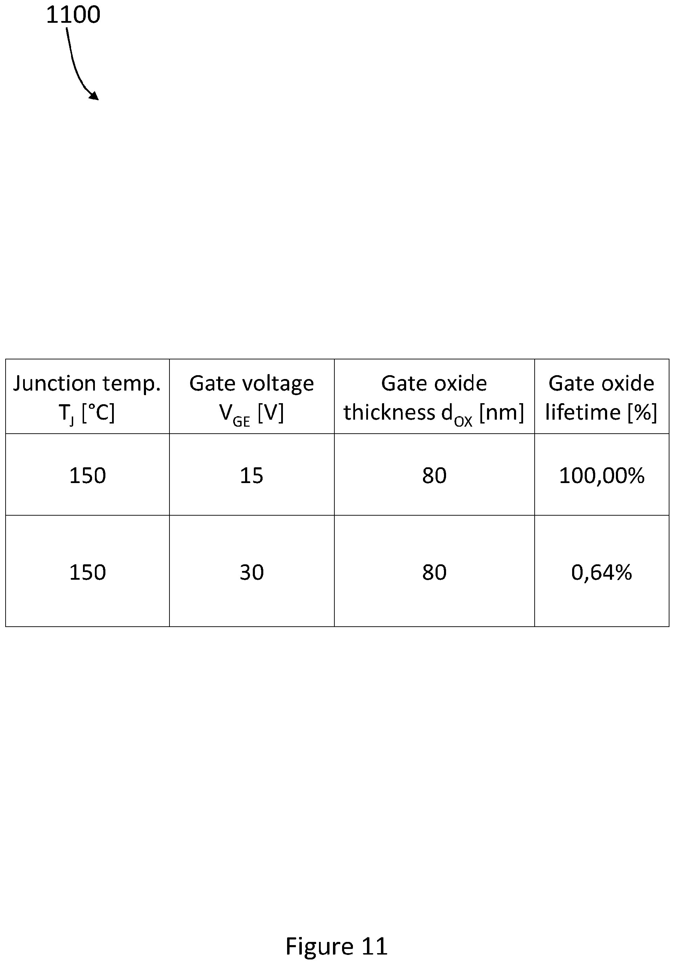

Figure 11 is a table 1100 showing calculated gate-oxide lifetime for a low gate voltage, in accordance with aspects of the present disclosure.

Table 1100 shows the calculated gate oxide lifetime (%) according to a junction temperature T_{J} of 150°C, a gate oxide thickness dₒₓ of 80nm for gate voltages V_{GE} of 15V and 30V.

The junction temperature is the temperature of the semiconductor (IGBT). The gate oxide thickness is the insulation thickness between the gate contact and the semiconductor device. The gate oxide thickness is a layer in the semiconductor structure itself. The gate oxide lifetime typically depends on the gate oxide thickness and the applied gate voltage as well as the junction temperature of the device.

A junction temperature of 150°C may be a typical maximum temperature for an IGBT or Diode.

Table 1100 illustrates the influence of the gate voltage on the gate oxide lifetime. Once the gate oxide fails, the IGBT may not be controlled through the gate and may subsequently fail as well. Normally, the gate oxide lifetime is designed to be well above the lifetime of the IGBT.

The use of high gate voltage for a hybrid DCCB; such as hybrid DCCB 300 described above in relation to Figure 1, tends to increase the breaking capability of the hybrid DCCB but also tends to increase the lifetime consumption of the hybrid DCCB. The lifetime consumption of the hybrid DCCB may be dependent on the gate oxide lifetime. For example, the gate oxide lifetime may be approximately 6 days for Tj=200°C, V_{GE}=60V, dox=100nm.

Since the breaking capability of the hybrid DCCB is rarely used, the hybrid DCCB 300 tends to require intermediate testing. Examples described herein generally relate to testing of the hybrid DCCB at a normal gate voltage (e.g. 15V) which tends to avoid unnecessary high lifetime consumption.

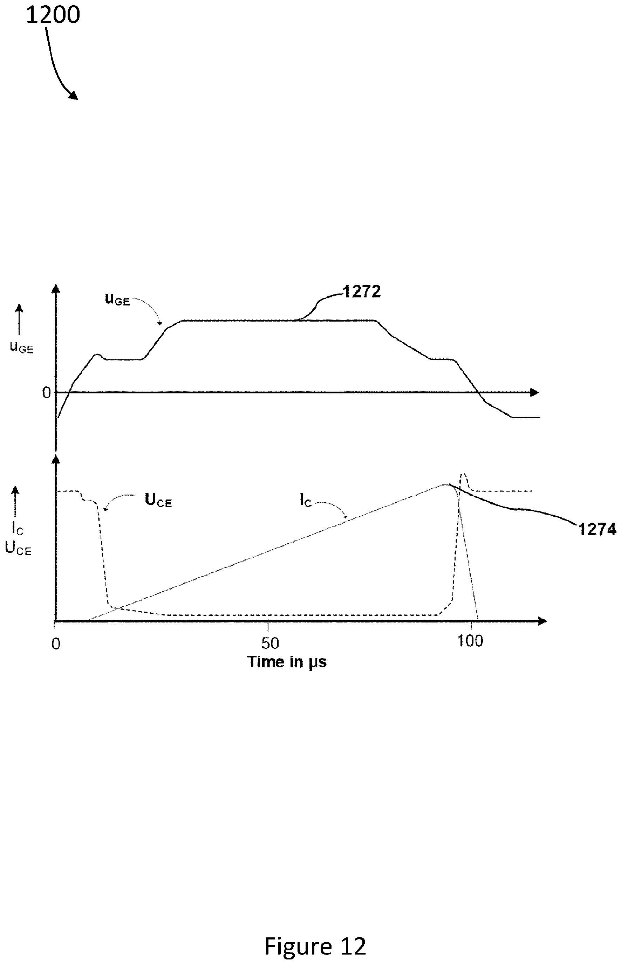

Figure 12 is a plot 1200 showing results from a single-pulse test of a DCCB using a high gate voltage, in accordance with aspects of the present disclosure.

Plot 1200 shows the measured voltage and current processes in the switching of a power semiconductor switching element; for example, as performed by apparatus 500 in Figure 5 when gate driver 550 switches IGBT 555. Plot 1200 shows V_{GE} for collector-emitter voltage V_{CE} and the collector current Ic over time t.

Before switching on, from V_{GE} = -15V, the DC link voltage is approximately 2000-2500V for an IGBT with a rated blocking voltage of 4.5kV . At about t = 10µs, a positive gate voltage of V_{GE} = 50V, for example, is applied; as indicated by reference numeral 1272. The current rises according to the inductance of the load or circuit. Close to t = 90µs, the switch-off signal is set. V_{GE} drops to the Miller plateau, which appears at around 20V with the increased current. Finally, as indicated by reference numeral 1274, a current I_{c} of up to 20 times nominal current is switched off successfully,. At the end of the process, the gate voltage falls again to the applied -5V.

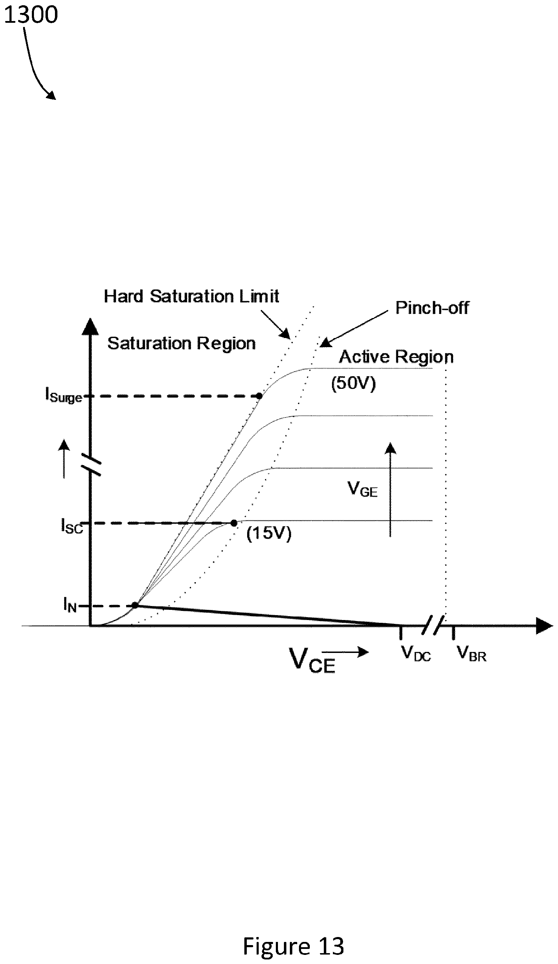

Figure 13 is a plot 1300 showing the Voltage and Current (V/I) characteristics of an IGBT. The V/I characteristics show different operation regions of an IGBT depending on the applied gate voltage and the current level, whereby the x-axis refers to the voltage across the device. For a gate voltage of 15V, the nominal current range is indicated with I_{N}. The maximum current at V_{GE}=15V that may be conducted through the IGBT, may be the short-circuit current Isc. The current is limited through the pinch-off effect that drives the semiconductor device from the saturation region into the active region. Operating an IGBT in the active region may be limited in time due to a massive heat dissipation within the device. Short-circuit currents may be typically turned off within 10µs as they are expected to be in the active region, for example. Increasing the gate-voltage level may increase the current carrying capability and thus allows turning off higher current magnitudes. Fig. 13 indicates that an increase of the gate-voltage level up to 50V may allow to conduct a so-called IGBT surge current I_{Surge} in the saturation region, which may be several times higher than the short-circuit current level at 15V. The increased gate-voltage level from 15V to 50V may allow conduction and turning off at much higher current levels, whereas the defined surge-current level may be designed for the saturation region.

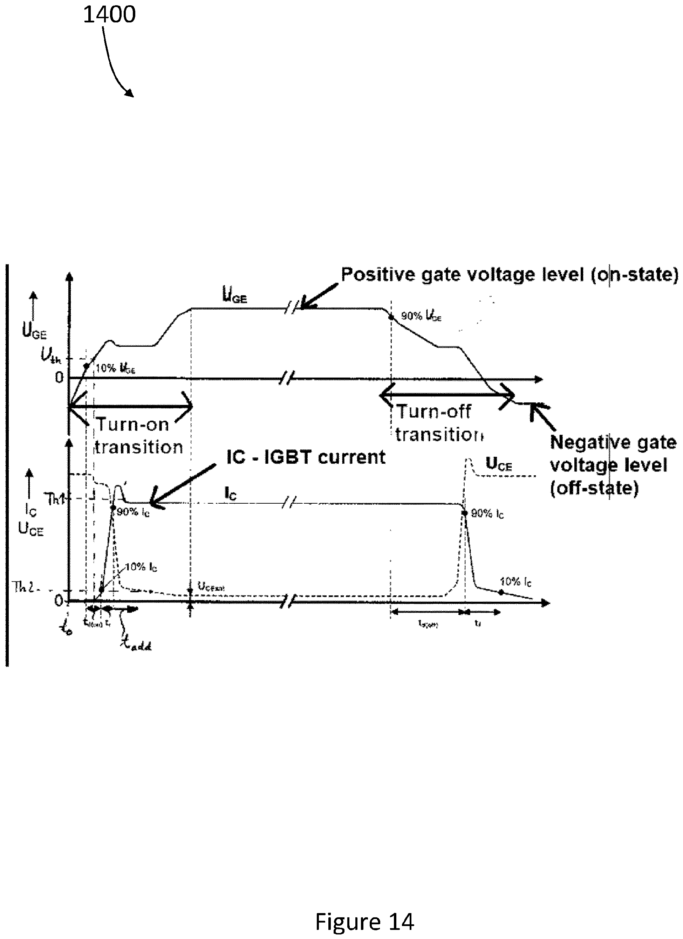

Figure 14 is a plot 1400 showing the change in the gate voltage of an IGBT for turn on and turn off, in accordance with aspects of the present disclosure. Plot 1500 illustrates the change in the gate voltage (U_{GE}) and the collector-emitter voltage (U_{CE}) over time t for an IGBT such as IGBT 555 described above in relation to Figure 5.

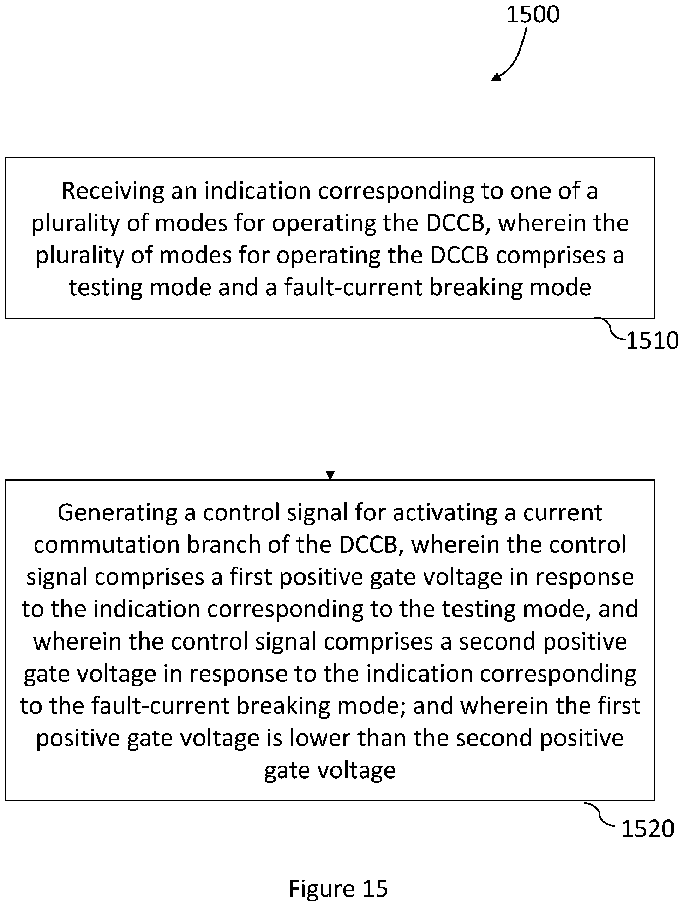

Plot 1400 describes a normal turn-on and turn-off transition for the IGBT. For turning on the IGBT, the gate voltage U_{GE} is raised from the negative level to a positive level. The turn-on transition may take several microseconds. A gate voltage level U_{GE} of +15 to +20V is reached for normal operation; this corresponds to an on-state of the IGBT. The on-state of the IGBT enables continuous current conduction through the IGBT. The turn-off transition may also take several microseconds. The turn-off transition comprises decreasing the positive gate voltage U_{GE} to a negative level. The IGBT may be held in off state. Figure 15 shows a method 1500 of operating a DCCB, in accordance with aspects of the present disclosure.

A first step 1510 comprises receiving an indication corresponding to one of a plurality of modes for operating the DCCB, wherein the plurality of modes for operating the DCCB comprises a testing mode and a fault-current breaking mode.

A second step 1520 comprises generating a control signal for activating a current commutation branch of the DCCB, wherein the control signal comprises a first positive gate voltage in response to the indication corresponding to the testing mode, and wherein the control signal comprises a second positive gate voltage in response to the indication corresponding to the fault-current breaking mode; and wherein the first positive gate voltage is lower than the second positive gate voltage.

Reference throughout this specification to an example of a particular method or apparatus, or similar language, means that a particular feature, structure, or characteristic described in connection with that example is included in at least one implementation of the method and apparatus described herein. The terms "including", "comprising", "having", and variations thereof, mean "including but not limited to", unless expressly specified otherwise. An enumerated listing of items does not imply that any or all of the items are mutually exclusive, unless expressly specified otherwise. The terms "a", "an", and "the" also refer to "one or more", unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one, and only one, of any single item in the list. For example, "one of A, B and C" includes only A, only B or only C and excludes combinations of A, B and C. As used herein, "a member selected from the group consisting of A, B, and C" includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the disclosed method and apparatus are described with reference to schematic flowchart diagrams and/or schematic block diagrams of methods, apparatuses, systems, and program products. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams.

The schematic flowchart diagrams and/or schematic block diagrams in the Figures illustrate the architecture, functionality, and operation of possible implementations of apparatuses, systems, methods, and program products. In this regard, each block in the schematic flowchart diagrams and/or schematic block diagrams may represent a module, segment, or portion of code, which includes one or more executable instructions of the code for implementing the specified logical function(s).

It will be appreciated that numerical values recited herein are merely intended to help illustrate the working of the invention and may vary depending on the requirements of a given power transmission network, component thereof, or power transmission application.

The listing or discussion of apparently prior-published documents or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

There is provided an apparatus for operating a direct current circuit breaker, DCCB, the apparatus comprising: at least one memory; and at least one processor coupled with the at least one memory and configured to cause the apparatus to: receive an indication corresponding to one of a plurality of modes for operating the DCCB, wherein the plurality of modes for operating the DCCB comprises a testing mode and a fault-current breaking mode; generate a control signal for activating a current commutation branch of the DCCB, wherein the control signal comprises a first positive gate voltage in response to the indication corresponding to the testing mode, and wherein the control signal comprises a second positive gate voltage in response to the indication corresponding to the fault-current breaking mode; and wherein the first positive gate voltage is lower than the second positive gate voltage.

Such an apparatus tends to extend the lifetime of the DCCB. In addition, the apparatus tends to reduce a total number of Insulated Gate Bipolar Transistor (IGBTs) in the current commutation branch of the DCCB compared to DCCBs in the prior art. Furthermore, the apparatus tends to enable regular testing of the DCCB.

The DCCB may be for the protection of Voltage Sourced Converter (VSC) based High Voltage Direct Current (HVDC) power transmission systems. The DCCB may be for the protection of DC networks. The DCCB may be a hybrid DCCB.

The apparatus may be a controller. The controller may be arranged to activate or deactivate the main branch of the DCCB. The controller may be arranged to activate or deactivate the current commutation branch of the DCCB. The indication corresponding to the fault-current breaking mode may be received when the operational current received by the DCCB exceeds a current threshold. The indication corresponding to the fault-current breaking mode may be received when the operational current received by the DCCB exceeds a rate of change of current threshold, or an instantaneous current threshold, or any other suitable system related detection. The indication corresponding to the fault-current breaking mode may be received in response to a failure indicating signal from a main control system.

The at least one processor coupled with the at least one memory being configured to cause the apparatus to receive an indication corresponding to one of a plurality of modes for operating the DCCB may comprise the at least one processor coupled with the at least one memory being further configured to cause the apparatus to receive an indication in software. The at least one processor coupled with the at least one memory being configured to cause the apparatus to receive an indication corresponding to one of a plurality of modes for operating the DCCB may comprise the at least one processor coupled with the at least one memory being further configured to cause the apparatus to receive an indication in firmware. The at least one processor coupled with the at least one memory being configured to cause the apparatus to receive an indication corresponding to one of a plurality of modes for operating the DCCB may comprise the at least one processor coupled with the at least one memory being further configured to cause the apparatus to receive an indication in hardware. The indication corresponding to one of a plurality of modes for operating the DCCB may be an electrical signal. The indication corresponding to one of a plurality of modes for operating the DCCB may be a logic signal. The indication corresponding to one of a plurality of modes for operating the DCCB may be a digital signal.

The at least one processor coupled with the at least one memory being configured to cause the apparatus to generate a control signal for activating a current commutation branch of the DCCB may comprise the at least one processor coupled with the at least one memory being further configured to cause the apparatus to transmit the control signal for activating a current commutation branch of the DCCB.

The plurality of modes for operating the DCCB may further comprise a normal operating mode. The normal operating mode may comprise closing a mechanical switch in the main branch of the DCCB. The normal operating mode may comprise activating a main branch of the DCCB. The normal operating mode may comprise deactivating a current commutation branch of the DCCB. The fault-current breaking mode may be a fault-current interruption mode. The fault-current breaking mode may comprise interrupting an operational current through the DCCB.

The control signal may be an electrical signal. The control signal may comprise a current. The control signal may be arranged to drive a plurality of first IGBTs connected in series in the current commutation branch of the DCCB. The control signal may be arranged to drive each of the plurality of first IGBTs connected in series in the current commutation branch of the DCCB at their gates. The gates of each of the plurality of first IGBTs connected in series in the current commutation branch of the DCCB may be the control pin of each of the plurality of first IGBTs connected in series in the current commutation branch of the DCCB.

The at least one processor coupled with the at least one memory may be further configured to cause the apparatus to: activate the current commutation branch of the DCCB using the control signal in response to the indication corresponding to the testing mode.

The at least one processor coupled with the at least one memory being configured to cause the apparatus to activate the current commutation branch of the DCCB may comprise the at least one processor coupled with the at least one memory being further configured to cause the apparatus to turn on the current commutation branch of the DCCB. The at least one processor coupled with the at least one memory being configured to cause the apparatus to activate the current commutation branch of the DCCB may comprise the at least one processor coupled with the at least one memory being further configured to cause the apparatus to apply the control signal to the current commutation branch of the DCCB. The at least one processor coupled with the at least one memory being configured to cause the apparatus to activate the current commutation branch of the DCCB may comprise the at least one processor coupled with the at least one memory being further configured to cause the apparatus to apply the control signal to the plurality of first IGBTs connected in series in the current commutation branch of the DCCB. The at least one processor coupled with the at least one memory being configured to cause the apparatus to activate the current commutation branch of the DCCB may comprise the at least one processor coupled with the at least one memory being further configured to cause the apparatus to switch the current commutation branch of the DCCB to a closed state.

The at least one processor coupled with the at least one memory being configured to cause the apparatus to activate the current commutation branch of the DCCB may comprise the at least one processor coupled with the at least one memory being further configured to cause the apparatus to raise the gate voltage of the plurality of first IGBTs from a negative level to a positive level. The positive level may be greater than or equal to 15V and less than or equal to 20V, which typically corresponds to standard gate voltage level for on-state of IGBTs as per manufacturers datasheet specifications. The positive level may correspond to a normal operation mode of the plurality of first IGBTs. The positive level may correspond to an on-state of the plurality of first IGBTs. The on-state of the plurality of first IGBTs may correspond to continuous current conduction. Raising the gate voltage of the plurality of first IGBTs from the negative level to the positive level may take several microseconds.

The at least one processor coupled with the at least one memory may be further configured to cause the apparatus to activate the current commutation branch of the DCCB using the control signal in response to the indication corresponding to the testing mode.

The at least one processor coupled with the at least one memory may be further configured to cause the apparatus to: deactivate the current commutation branch of the DCCB in response to the indication corresponding to the testing mode.

The at least one processor coupled with the at least one memory being configured to cause the apparatus to deactivate the current commutation branch of the DCCB may comprise the at least one processor coupled with the at least one memory being further configured to cause the apparatus to turn off the current commutation branch of the DCCB. The at least one processor coupled with the at least one memory being configured to cause the apparatus to deactivate the current commutation branch of the DCCB may comprise the at least one processor coupled with the at least one memory being further configured to cause the apparatus to terminate the control signal to the current commutation branch of the DCCB. The at least one processor coupled with the at least one memory being configured to cause the apparatus to deactivate the current commutation branch of the DCCB may comprise the at least one processor coupled with the at least one memory being further configured to cause the apparatus to terminate the control signal to the plurality of first IGBTs connected in series in the current commutation branch of the DCCB. The at least one processor coupled with the at least one memory being configured to cause the apparatus to deactivate the current commutation branch of the DCCB may comprise the at least one processor coupled with the at least one memory being further configured to cause the apparatus to switch the current commutation branch of the DCCB to an open state.

The at least one processor coupled with the at least one memory being configured to cause the apparatus to deactivate the current commutation branch of the DCCB may comprise the at least one processor coupled with the at least one memory being further configured to cause the apparatus to lower the gate voltage of the plurality of first IGBTs from the positive level to the negative level. The negative level may correspond to an off-state of the plurality of first IGBTs. The off-state of the plurality of first IGBTs may correspond to interrupted current. The at least one processor coupled with the at least one memory may be configured to cause the apparatus to deactivate the main branch of the DCCB. The at least one processor coupled with the at least one memory being configured to cause the apparatus to deactivate the main branch of the DCCB may comprise the at least one processor coupled with the at least one memory being further configured to cause the apparatus to hold the plurality of first IGBTs in the off-state.

The at least one processor coupled with the at least one memory may be further configured to cause the apparatus to deactivate the current commutation branch of the DCCB in response to the indication corresponding to the testing mode.

The at least one processor coupled with the at least one memory may be further configured to cause the apparatus to: activate a main branch of the DCCB.

The at least one processor coupled with the at least one memory being configured to cause the apparatus to activate the main branch of the DCCB may comprise the at least one processor coupled with the at least one memory being further configured to cause the apparatus to turn on the main branch of the DCCB. The at least one processor coupled with the at least one memory being configured to cause the apparatus to activate the main branch of the DCCB may comprise the at least one processor coupled with the at least one memory being further configured to cause the apparatus to apply the control signal to the main branch of the DCCB. The at least one processor coupled with the at least one memory being configured to cause the apparatus to activate the main branch of the DCCB may comprise the at least one processor coupled with the at least one memory being further configured to cause the apparatus to apply the control signal to the one or more second IGBTs in the main branch of the DCCB. The at least one processor coupled with the at least one memory being configured to cause the apparatus to activate the main branch of the DCCB may comprise the at least one processor coupled with the at least one memory being further configured to cause the apparatus to switch the main branch of the DCCB to a closed state.

The at least one processor coupled with the at least one memory being configured to cause the apparatus to activate the main branch of the DCCB may comprise the at least one processor coupled with the at least one memory being further configured to cause the apparatus to raise the gate voltage of the one or more second IGBTs from a negative level to a positive level. The positive level may be greater than or equal to 15V and less than or equal to 20V. The positive level may correspond to a normal operation mode of the one or more second IGBTs. The positive level may correspond to an on-state of the one or more second IGBTs. The on-state of the one or more second IGBTs may correspond to continuous current conduction. Raising the gate voltage of the one or more second IGBTs from the negative level to the positive level may take several microseconds. The at least one processor coupled with the at least one memory may be further configured to cause the apparatus to maintain the one or more second IGBTs in the on-state.

The at least one processor coupled with the at least one memory may be further configured to cause the apparatus to activate a main branch of the DCCB in response to the indication corresponding to the testing mode.

The at least one processor coupled with at least one memory may be further configured to cause the apparatus to: deactivate the main branch of the DCCB.

The at least one processor coupled with the at least one memory being configured to cause the apparatus to deactivate the main branch of the DCCB may comprise the at least one processor coupled with the at least one memory being further configured to cause the apparatus to turn off the main branch of the DCCB. The at least one processor coupled with the at least one memory being configured to cause the apparatus to deactivate the main branch of the DCCB may comprise the at least one processor coupled with the at least one memory being further configured to cause the apparatus to terminate the control signal to the main branch of the DCCB. The at least one processor coupled with the at least one memory being configured to cause the apparatus to deactivate the main branch of the DCCB may comprise the at least one processor coupled with the at least one memory being further configured to cause the apparatus to terminate the control signal to the one or more second IGBTs in the main branch of the DCCB. The at least one processor coupled with the at least one memory being configured to cause the apparatus to deactivate the main branch of the DCCB may comprise the at least one processor coupled with the at least one memory being further configured to cause the apparatus to switch the main branch of the DCCB to an open state.

The at least one processor coupled with the at least one memory being configured to cause the apparatus to deactivate the main branch of the DCCB may comprise the at least one processor coupled with the at least one memory being further configured to cause the apparatus to lower the gate voltage of the one or more second IGBTs from the positive level to the negative level. The negative level may correspond to an off-state of the one or more second IGBTs. The off-state of the one or more second IGBTs may correspond to interrupted current. The at least one processor coupled with the at least one memory being configured to cause the apparatus to deactivate the main branch of the DCCB may comprise the at least one processor coupled with the at least one memory being further configured to cause the apparatus to hold the one or more second IGBTs in the off-state.

The at least one processor coupled with the at least one memory may be further configured to cause the apparatus to deactivate the main branch of the DCCB in response to the indication corresponding to the testing mode.

The at least one processor coupled with the at least one memory may be further configured to cause the apparatus to: direct an operational current through the DCCB. The at least one processor coupled with the at least one memory being configured to cause the apparatus to direct an operational current through the DCCB may comprise the at least one processor coupled with the at least one memory being further configured to cause the apparatus to receive an operational current at the DCCB. The operational current may be a high voltage direct current (HVDC). The at least one processor coupled with the at least one memory being configured to cause the apparatus to direct an operational current through the DCCB may comprise the at least one processor coupled with the at least one memory being further configured to cause the apparatus to direct the operational current through a main branch of the DCCB. The at least one processor coupled with the at least one memory being configured to cause the apparatus to direct an operational current through the main branch of the DCCB may comprise the at least one processor coupled with the at least one memory being further configured to cause the apparatus to close a mechanical switch in the main branch of the DCCB. The at least one processor coupled with the at least one memory being configured to cause the apparatus to direct an operational current through the DCCB may comprise the at least one processor coupled with the at least one memory being further configured to cause the apparatus to direct the operational current through the current commutation branch of the DCCB. The at least one processor coupled with the at least one memory being configured to cause the apparatus to direct the operational current through the current commutation branch of the DCCB may comprise the at least one processor coupled with the at least one memory being further configured to cause the apparatus to activate the current commutation branch of the DCCB. The at least one processor coupled with the at least one memory being configured to cause the apparatus to direct the operational current through the current commutation branch of the DCCB may comprise the at least one processor coupled with the at least one memory being further configured to cause the apparatus to open the mechanical switch in the main branch of the DCCB.

The operational current may comprise a first current direction. The first current direction may flow from a first input/output port of the DCCB to a second input/output port of the DCCB. The operational current may comprise a second current direction. The second current direction may flow from the second input/output port of the DCCB to the first input/output port of the DCCB. The second current direction may be an opposite current direction to the first current direction.

The current direction of the operational current may be determined by an export direction of the operational current. The at least one processor coupled with the at least one memory may be further configured to control the current direction of the operational current for the testing mode. The at least one processor coupled with the at least one memory beingr configured to control the current direction of the operational current for the testing mode may reduce the duration of the test sequence. The at least one processor coupled with the at least one memory may be further configured to control the current direction of the operational current for the testing mode to reduce the test time of the testing mode. The at least one processor coupled with the at least one memory may be further configured to select the first current direction. The at least one processor coupled with the at least one memory may be further configured to select the second current direction. The at least one processor coupled with the at least one memory may be further configured to switch the current direction from the first current direction to the second current direction. The at least one processor coupled with the at least one memory may be further configured to switch the current direction from the second current direction to the first current direction. The testing mode may be performed using the first current direction. The testing mode may be performed using the second current direction. The DCCB may be tested using the first current direction. The DCCB may be tested using the second current direction.

A system control may control the direction of the operational current for the testing mode. A system control may control the direction of the operational current to reduce the test time of the testing mode. The system control may be a converter system control. The system control may perform the testing mode using the first current direction. The system control may perform the testing mode using the second current direction. The system control may control the current direction. The HVDC control may perform the testing mode using the first current direction. The HVDC control may perform the testing mode using the second current direction.

The at least one processor coupled with the at least one memory may be further configured to cause the apparatus to: interrupt the operational current through the DCCB. The at least one processor coupled with the at least one memory being configured to cause the apparatus to interrupt the operational current through the DCCB may comprise the at least one processor coupled with the at least one memory being further configured to cause the apparatus to open the mechanical switch in the main branch of the DCCB. The at least one processor coupled with the at least one memory being configured to cause the apparatus to interrupt the operational current through the DCCB may comprise the at least one processor coupled with the at least one memory being further configured to cause the apparatus to activate the current commutation branch of the DCCB. The at least one processor coupled with the at least one memory being configured to cause the apparatus to interrupt the operational current through the DCCB may comprise the at least one processor coupled with the at least one memory being further configured to cause the apparatus to interrupt the operational current through the DCCB when the operational current exceeds an operational current value of 100A. The at least one processor coupled with the at least one memory being configured to cause the apparatus to interrupt the operational current through the DCCB may comprise the at least one processor coupled with the at least one memory being further configured to cause the apparatus to interrupt the operational current through the DCCB when the operational current exceeds an operational current value of 100A and is less than an operational current value of 1000A. The at least one processor coupled with the at least one memory being configured to cause the apparatus to interrupt the operational current through the DCCB may comprise the at least one processor coupled with the at least one memory being further configured to cause the apparatus to interrupt the operational current through the DCCB when the operational current exceeds an operational current value of 100A and is less than an operational current value of 2000A. The operational current value at which the operational current is interrupted may depend on the selected IGBT. The operational current value at which the operational current is interrupted may depend on a gate voltage level of the selected IGBT.

The first positive gate voltage may correspond to a standard gating voltage of an insulated gate bipolar transistor, IGBT. The standard gating voltage may be defined by the manufacturer's specification for the IGBT. The standard gating voltage of an IGBT may be between +15V and +20V. The standard gating voltage of an IGBT may be an operational voltage of an IGBT. The first positive gate voltage may be a low gate voltage.

The second positive gate voltage may be greater than or equal to +25V and less than or equal to +60V. The second positive gate voltage may be greater than or equal to +25V and less than or equal to +35V. The second positive gate voltage may be greater than or equal to +35V and less than or equal to +60V. The second positive gate voltage may be outside the manufacturer's datasheet for the first IGBTs. The second positive gate voltage may be higher than the standard gating voltage of an IGBT. The second positive gate voltage may correspond to a standard voltage for fault-current breaking. The second positive gate voltage may correspond to the voltage used in the fault-current breaking mode. The second positive gate voltage may be a high gate voltage.

The current commutation branch of the DCCB may comprise a plurality of first IGBTs connected in series to one another. The current commutation branch of the DCCB may not comprise a plurality of IGBTs connected in parallel to one another. The current commutation branch of the DCCB may comprise a plurality of first IGBTs connected in series. Each of the plurality of first IGBTs may comprise a switching element. The main branch of the DCCB may comprise one or more second IGBTs. A plurality of the one or more second IGBTs may be connected in series. A plurality of the one or more second IGBTs may be connected in series to one another. Each of the one or more second IGBTs may comprise a switching element. The switching element may be a semiconductor switching element. The switching element may be a power semiconductor switching element. The switching element may comprise an Insulated Gate Bipolar Transistor (IGBT).

The testing mode may comprise performing one of a plurality of test sequences. The plurality of testing sequences may comprise a first test sequence, a second test sequence and a third test sequence. Any one of the plurality of test sequences may be performed whilst an operational current is directed through the DCCB.

The first test sequence may be a commutation test sequence. The first test sequence may comprise at least one of: activating the current commutation branch of the DCCB using the control signal; deactivating a main branch of the DCCB; activating the main branch of the DCCB; and/or deactivating the current commutation branch of the DCCB.

The second test sequence may be a breaking test sequence. The second test sequence may comprise at least one of: activating the current commutation branch of the DCCB using the control signal; deactivating a main branch of the DCCB; and/or deactivating the current commutation branch of the DCCB.

The third test sequence may be a paralleling test sequence. The third test sequence may comprise at least one of: activating the current commutation branch of the DCCB using the control signal; and/or activating a main branch of the DCCB.

The at least one processor coupled with the at least one memory may be further configured to cause the apparatus to determine an outcome of the testing mode. The at least one processor coupled with the at least one memory may be further configured to cause the apparatus to determine an outcome of the testing mode may comprise the at least one processor coupled with the at least one memory may be further configured to cause the apparatus to determine that the testing mode has passed. The at least one processor coupled with the at least one memory being configured to cause the apparatus to determine that the testing mode has passed may comprise the at least one processor coupled with the at least one memory being further configured to cause the apparatus to determine that an operational current has commutated from the main branch of the DCCB to the current commutation branch of the DCCB. The at least one processor coupled with the at least one memory being configured to cause the apparatus to determine that the testing mode has passed may comprise the at least one processor coupled with the at least one memory being further configured to cause the apparatus to determine that an operational current has commutated from the current commutation branch of the DCCB to the main branch of the DCCB. The at least one processor coupled with the at least one memory being configured to cause the apparatus to determine that an operational current has commutated from the main branch of the DCCB to the current commutation branch of the DCCB and/or that an operational current has commutated from the current commutation branch of the DCCB to the main branch of the DCCB may comprise the at least one processor coupled with the at least one memory being further configured to cause the apparatus to measure currents in the plurality of first IGBTs and/or one or more second IGBTs. The at least one processor coupled with the at least one memory being configured to cause the apparatus to determine that an operational current has commutated from the main branch of the DCCB to the current commutation branch of the DCCB and/or that an operational current has commutated from the current commutation branch of the DCCB to the main branch of the DCCB may comprise the at least one processor coupled with the at least one memory being further configured to cause the apparatus to measure one or more feedback signals from the plurality of first IGBTs and/or one or more second IGBTs.

The at least one processor coupled with the at least one memory being configured to cause the apparatus to determine the outcome of the testing mode may comprise the at least one processor coupled with the at least one memory being further configured to cause the apparatus to determine that the testing mode has failed.

One or more gate driver units of the DCCB may incorporate a bidirectional communication interface to allow setting the operating mode of the plurality of first IGBTs and/or one or more second IGBTs. The at least one processor coupled with the at least one memory may be further configured to cause the apparatus to set the operating mode of the plurality of first IGBTs and/or one or more second IGBTs. The operating mode of the plurality of first IGBTs and/or one or more second IGBTs may be a test operation mode or a normal operation mode. The plurality of first IGBTs and/or one or more second IGBTs may provide status information by the one or more feedback signals. The one or more feedback signals may be gate driver feedback signals. The at least one processor coupled with the at least one memory may be further configured to cause the apparatus to evaluate status information from the one or more feedback signals.

The DCCB may comprise a control unit for evaluating status information from the one or more gate driver's feedback. Status information may indicate healthy signs or functional errors for determining the outcome of the testing mode.

A system control or the control unit of the DCCB may evaluate if the test mode was successfully passed based on the final status for the performed test sequence and status information from the gate drivers. A non-successful test may indicate the failed sequence step and IGBT positions with non-healthy feedback signs (e.g., no feedback, non-healthy feedback).

The at least one processor coupled with the at least one memory being configured to cause the apparatus to direct the operational current through the DCCB may comprise the at least one processor coupled with the at least one memory being further configured to cause the apparatus to control at least one converter stage out of a converter system. The converter system may be the first power converter means 110 or the second power converter means 120 described above in relation to Figure 1. The converter system may comprise at least two converter stages. Each of the at least two converter stages may comprise an AC/DC converter. Each of the at least two converter stages may be arranged to direct current into the first current direction or the second current direction. Each of the at least two converter stages may be arranged to direct current into the first current direction or second current direction for the testing mode. A system control may be arranged to adjust the current level by controlling the at least one converter stage.

There is further provided an apparatus comprising means for: receiving an indication corresponding to one of a plurality of modes for operating the DCCB, wherein the plurality of modes for operating the DCCB comprises a testing mode and a fault-current breaking mode; generating a control signal for activating a current commutation branch of the DCCB, wherein the control signal comprises a first positive gate voltage in response to the indication corresponding to the testing mode, and wherein the control signal comprises a second positive gate voltage in response to the indication corresponding to the fault-current breaking mode; and wherein the first positive gate voltage is lower than the second positive gate voltage.

There is further provided a method of operating a direct current circuit breaker, DCCB, the method comprising: receiving an indication corresponding to one of a plurality of modes for operating the DCCB, wherein the plurality of modes for operating the DCCB comprises a testing mode and a fault-current breaking mode; generating a control signal for activating a current commutation branch of the DCCB, wherein the control signal comprises a first positive gate voltage in response to the indication corresponding to the testing mode, and wherein the control signal comprises a second positive gate voltage in response to the indication corresponding to the fault-current breaking mode; and wherein the first positive gate voltage is lower than the second positive gate voltage.

Such a method tends to extend the lifetime of the DCCB. In addition, the method tends to reduce a total number of Insulated Gate Bipolar Transistor (IGBTs) in the current commutation branch of the DCCB compared to DCCBs in the prior art. Furthermore, the method tends to enable regular testing of the DCCB.

The method may be performed by a controller. The controller may be arranged to activate or deactivate the main branch of the DCCB. The controller may be arranged to activate or deactivate the current commutation branch of the DCCB. The indication corresponding to the fault-current breaking mode may be received when the operational current received by the DCCB exceeds a current threshold. The indication corresponding to the fault-current breaking mode may be received when the operational current received by the DCCB exceeds a rate of change of current threshold, or an instantaneous current threshold, or any other suitable system related detection. The indication corresponding to the fault-current breaking mode may be received in response to a failure indicating signal from a main control system.

Receiving an indication corresponding to one of a plurality of modes for operating the DCCB may comprise receiving an indication in software. Receiving an indication corresponding to one of a plurality of modes for operating the DCCB may comprise receiving an indication in firmware. Receiving an indication corresponding to one of a plurality of modes for operating the DCCB may comprise receiving an indication in hardware. The indication corresponding to one of a plurality of modes for operating the DCCB may be an electrical signal. The indication corresponding to one of a plurality of modes for operating the DCCB may be a logic signal. The indication corresponding to one of a plurality of modes for operating the DCCB may be a digital signal. Generating a control signal for activating a current commutation branch of the DCCB may comprise transmitting the control signal for activating the current commutation branch of the DCCB.

The testing mode may comprise activating the current commutation branch of the DCCB using the control signal. Activating the current commutation branch of the DCCB may comprise turning on the current commutation branch of the DCCB. Activating the current commutation branch of the DCCB may comprise applying the control signal to the current commutation branch of the DCCB. Activating the current commutation branch of the DCCB may comprise applying the control signal to the plurality of first IGBTs connected in series in the current commutation branch of the DCCB. Activating the current commutation branch of the DCCB may comprise switching the current commutation branch of the DCCB to a closed state.

Activating the current commutation branch of the DCCB may comprise raising the gate voltage of the plurality of first IGBTs from a negative level to a positive level. The positive level may be greater than or equal to 15V and less than or equal to 20V, which typically corresponds to standard gate voltage level for on-state of IGBTs as per manufacturers datasheet specifications. The positive level may correspond to a normal operation mode of the plurality of first IGBTs. The positive level may correspond to an on-state of the plurality of first IGBTs. The on-state of the plurality of first IGBTs may correspond to continuous current conduction. Raising the gate voltage of the plurality of first IGBTs from the negative level to the positive level may take several microseconds.

The testing mode may further comprise deactivating the current commutation branch of the DCCB. Deactivating the current commutation branch of the DCCB may comprise turning off the current commutation branch of the DCCB. Deactivating the current commutation branch of the DCCB may comprise terminating the control signal to the current commutation branch of the DCCB. Deactivating the current commutation branch of the DCCB may comprise terminating the control signal to the plurality of first IGBTs connected in series in the current commutation branch of the DCCB. Deactivating the current commutation branch of the DCCB may comprise switching the current commutation branch of the DCCB to an open state.

Deactivating the current commutation branch of the DCCB may comprise lowering the gate voltage of the plurality of first IGBTs from the positive level to the negative level. The negative level may correspond to an off-state of the plurality of first IGBTs. The off-state of the plurality of first IGBTs may correspond to interrupted current. Deactivating the main branch of the DCCB may comprise holding the plurality of first IGBTs in the off-state.

The testing mode may further comprise activating a main branch of the DCCB. Activating the main branch of the DCCB may comprise turning on the main branch of the DCCB. Activating the main branch of the DCCB may comprise applying the control signal to the main branch of the DCCB. Activating the main branch of the DCCB may comprise applying the control signal to the one or more second IGBTs in the main branch of the DCCB. Activating the main branch of the DCCB may comprise switching the main branch of the DCCB to a closed state.

Activating the main branch of the DCCB may comprise raising the gate voltage of the one or more second IGBTs from a negative level to a positive level. The positive level may be greater than or equal to 15V and less than or equal to 20V. The positive level may correspond to a normal operation mode of the one or more second IGBTs. The positive level may correspond to an on-state of the one or more second IGBTs. The on-state of the one or more second IGBTs may correspond to continuous current conduction. Raising the gate voltage of the one or more second IGBTs from the negative level to the positive level may take several microseconds. The testing mode may further comprise maintaining the one or more second IGBTs in the on-state.

The testing mode may further comprise deactivating the main branch of the DCCB. Deactivating the main branch of the DCCB may comprise turning off the main branch of the DCCB. Deactivating the main branch of the DCCB may comprise terminating the control signal to the main branch of the DCCB. Deactivating the main branch of the DCCB may comprise terminating the control signal to the one or more second IGBTs in the main branch of the DCCB. Deactivating the main branch of the DCCB may comprise switching the main branch of the DCCB to an open state.

Deactivating the main branch of the DCCB may comprise lowering the gate voltage of the one or more second IGBTs from the positive level to the negative level. The negative level may correspond to an off-state of the one or more second IGBTs. The off-state of the one or more second IGBTs may correspond to interrupted current. Deactivating the main branch of the DCCB may comprise holding the one or more second IGBTs in the off-state.

The method may further comprise directing an operational current through the DCCB. Directing an operational current through the DCCB may comprise receiving an operational current at the DCCB. The operational current may be a high voltage direct current (HVDC). Directing the operational current through the DCCB may comprise directing the operational current through a main branch of the DCCB. Directing the operational current through a main branch of the DCCB may comprise closing a mechanical switch in the main branch of the DCCB. Directing the operational current through the DCCB may comprise directing the operational current through the current commutation branch of the DCCB. Directing the operational current through the current commutation branch of the DCCB may comprise activating the current commutation branch of the DCCB. Directing the operational current through the current commutation branch of the DCCB may comprise opening the mechanical switch in the main branch of the DCCB.

The method may further comprise interrupting the operational current through the DCCB. Interrupting the operational current through the DCCB may comprise opening the mechanical switch in the main branch of the DCCB. Interrupting the operational current through the DCCB may comprise activating the current commutation branch of the DCCB.

Interrupting the operational current through the DCCB may comprise interrupting the operational current through the DCCB when the operational current exceeds a first operational current value. Interrupting the operational current through the DCCB may comprise interrupting the operational current through the DCCB when the operational current exceeds the first operational current value and is less than a second operational current value. The first operational current value may be any value up to 50A or even up to 100A. The second operational current value may be any value up to 1000A and up to and including 2000A. Interrupting the operational current through the DCCB may comprise interrupting the operational current through the DCCB when the operational current exceeds an operational current value of 100A. Interrupting the operational current through the DCCB may comprise interrupting the operational current through the DCCB when the operational current exceeds an operational current value of 100A and is less than an operational current value of 1000A. Interrupting the operational current through the DCCB may comprise interrupting the operational current through the DCCB when the operational current exceeds an operational current value of 100A and is less than an operational current value of 2000A. The operational current value at which the operational current is interrupted may depend on the selected IGBT. The operational current value at which the operational current is interrupted may depend on a gate voltage level of the selected IGBT.

The method may further comprise determining an outcome of the testing mode. Determining the outcome of the testing mode may comprise determining that the testing mode has passed. Determining that the testing mode has passed may comprise determining that an operational current has commutated from the main branch of the DCCB to the current commutation branch of the DCCB. Determining that the testing mode has passed may comprise determining that an operational current has commutated from the current commutation branch of the DCCB to the main branch of the DCCB. Determining that an operational current has commutated from the main branch of the DCCB to the current commutation branch of the DCCB and/or determining that an operational current has commutated from the current commutation branch of the DCCB to the main branch of the DCCB may comprise measuring currents in the plurality of first IGBTs and/or one or more second IGBTs. Determining that an operational current has commutated from the main branch of the DCCB to the current commutation branch of the DCCB and/or determining that an operational current has commutated from the current commutation branch of the DCCB to the main branch of the DCCB may comprise measuring one or more feedback signals from the plurality of first IGBTs and/or one or more second IGBTs.

Determining the outcome of the testing mode may comprise determining that the testing mode has failed. The method may further comprise evaluating status information from the one or more feedback signals.

Directing the operational current through the DCCB may comprise controlling at least one converter stage out of a converter system; for example, the first power converter means 110 or the second power converter means 120 described above in relation to Figure 1. The converter system may comprise at least two converter stages. Each of the at least two converter stages may comprise an AC/DC converter. Each of the at least two converter stages may be arranged to direct current into the first current direction or the second current direction. Each of the at least two converter stages may be arranged to direct current into the first current direction or second current direction for the testing mode. A system control may be arranged to adjust the current level by controlling the at least one converter stage.

## Claims

1. An apparatus for operating a direct current circuit breaker, DCCB, the apparatus comprising:
at least one memory; and
at least one processor coupled with the at least one memory and configured to cause the apparatus to:
receive an indication corresponding to one of a plurality of modes for operating the DCCB, wherein the plurality of modes for operating the DCCB comprises a testing mode and a fault-current breaking mode;
generate a control signal for activating a current commutation branch of the DCCB, wherein the control signal comprises a first positive gate voltage in response to the indication corresponding to the testing mode, and wherein the control signal comprises a second positive gate voltage in response to the indication corresponding to the fault-current breaking mode; and
wherein the first positive gate voltage is lower than the second positive gate voltage.

2. The apparatus of claim 1, wherein the at least one processor coupled with the at least one memory is further configured to cause the apparatus to:
activate the current commutation branch of the DCCB using the control signal in response to the indication corresponding to the testing mode.

3. The apparatus of claim 2, wherein the at least one processor coupled with the at least one memory is further configured to cause the apparatus to:
deactivate the current commutation branch of the DCCB in response to the indication corresponding to the testing mode.

4. The apparatus of any one of claims 2 to 3, wherein the at least one processor coupled with the at least one memory is further configured to cause the apparatus to:
activate a main branch of the DCCB.

5. The apparatus of claim 4, wherein the at least one processor coupled with the at least one memory is further configured to cause the apparatus to:
deactivate the main branch of the DCCB.

6. The apparatus of any one of claims 1 to 5, wherein the at least one processor coupled with the at least one memory is further configured to cause the apparatus to:
direct an operational current through the DCCB.

7. The apparatus of claim 6, wherein the at least one processor coupled with the at least one memory is further configured to:
switch a current direction of the operational current from a first current direction to a second current direction.

8. The apparatus of any one of claims 6 or 7, wherein the at least one processor coupled with the at least one memory is further configured to:
switch the current direction from the second current direction to the first current direction.

9. The apparatus of any one of claims 6 to 8, wherein the at least one processor coupled with the at least one memory is further configured to cause the apparatus to:
interrupt the operational current through the DCCB.

10. The apparatus of any one of claims 1 to 9, wherein the first positive gate voltage corresponds to a standard gating voltage of an insulated gate bipolar transistor, IGBT.

11. The apparatus of any one of claims 1 to 10, wherein the second positive gate voltage is greater than or equal to +25V and less than or equal to +60V.

12. The apparatus of any one of claims 1 to 11, wherein the current commutation branch of the DCCB comprises a plurality of first IGBTs connected in series to one another.

13. A method of operating a direct current circuit breaker, DCCB, the method comprising:
receiving an indication corresponding to one of a plurality of modes for operating the DCCB, wherein the plurality of modes for operating the DCCB comprises a testing mode and a fault-current breaking mode;
generating a control signal for activating a current commutation branch of the DCCB, wherein the control signal comprises a first positive gate voltage in response to the indication corresponding to the testing mode, and wherein the control signal comprises a second positive gate voltage in response to the indication corresponding to the fault-current breaking mode; and
wherein the first positive gate voltage is lower than the second positive gate voltage.

14. The method of claim 13, wherein the testing mode comprises activating the current commutation branch of the DCCB using the control signal.

15. The method of claim 14, wherein the testing mode further comprises deactivating the current commutation branch of the DCCB.
